# EUROPÄISCHE PATENTSCHRIFT

(11) **EP 3 214 284 B1**
(45) Veröffentlichungstag und Bekanntmachung des Hinweises auf die Patenterteilung: **13.03.2019**
(21) Anmeldenummer: 17150122.4
(22) Anmeldetag: 03.01.2017
(51) Int. Cl.: F01N 3/20, F01N 3/28, H05B 3/20

(54) **ABGASANLAGE, INSBESONDERE FÜR EINE BRENNKRAFTMASCHINE EINES FAHRZEUGS**
EXHAUST GAS SYSTEM, IN PARTICULAR FOR AN INTERNAL COMBUSTION ENGINE OF A VEHICLE
SYSTÈME D'ÉCHAPPEMENT EN PARTICULIER POUR UN MOTEUR À COMBUSTION INTERNE D'UN VÉHICULE AUTOMOBILE

(30) Priorität: 03.03.2016 DE 102016103798; 19.04.2016 DE 102016107213
(43) Veröffentlichungstag der Anmeldung: 06.09.2017
(73) Patentinhaber: Eberspächer Exhaust Technology GmbH & Co. KG, 66539 Neunkirchen (DE)
(72) Erfinder: Kurpejovic, Enver, 73230 Kirchheim/Teck (DE); Westerhoff, Bernd, 73650 Winterbach (DE); Binder, David, 73728 Esslingen (DE); Bürkle, Anika, 71686 Remseck (DE); Feyl-Narrain, Gita, 73730 Esslingen (DE); Glaser, Steffen, 70188 Stuttgart (DE); Hass, Ruben, 70599 Stuttgart (DE); Semenov, Oleksandr, 73207 Plochingen (DE); Vempati, Krishna Kumar, 73730 Esslingen (DE)
(74) Vertreter: Ruttensperger Lachnit Trossin Gomoll

(56) Entgegenhaltungen:
- EP-A1- 0 190 557
- EP-A1- 2 386 738
- WO-A1-2004/112433
- WO-A1-2013/087566
- DE-A1- 10 223 148
- DE-A1-102014 111 310
- DE-U1-202012 011 764
- FR-A1- 3 014 136
- JP-A- H05 296 032
- US-A- 4 671 058
- US-A1- 2003 079 467
- US-A1- 2011 258 983

## Beschreibung

Die vorliegende Erfindung betrifft eine Abgasanlage, durch welche beispielsweise die in einer Brennkraftmaschine eines Fahrzeugs erzeugten Abgase zur Umgebung hin abgegeben werden können.

Die DE 10 2014 117 048 A1 offenbart eine Abgasanlage, bei welcher zur Verringerung des Stickoxidanteils im Abgas ein Reaktionsmittel, beispielsweise eine Harnstoff/Wasser-Lösung, eingespritzt wird. Um eine bessere Durchmischung des Reaktionsmittels mit dem Abgas zu erlangen, wird das in Sprayform eingespritzte Reaktionsmittel auf ein elektrisch erregbares Heizelement zu eingespritzt. Das elektrisch erregbare Heizelement unterstützt die Reaktionsmittelverdampfung.

Eine Abgasanlage gemäß dem Oberbegriff des Anspruchs 1 ist aus der FR 3 014 136 A1 bekannt.

Es ist die Aufgabe der vorliegenden Erfindung, eine Abgasanlage, insbesondere für eine Brennkraftmaschine eines Fahrzeugs, vorzusehen, welche eine verbesserte Vermischung des in einen Abgasführungskanal eingespritzten Reaktionsmittels mit im Abgasführungskanal strömendem Abgas bereitstellt.

Erfindungsgemäß wird diese Aufgabe gelöst durch eine Abgasanlage, insbesondere für eine Brennkraftmaschine eines Fahrzeugs, gemäß Anspruch 1. Diese umfasst
- einen Abgasführungskanal,
- eine Reaktionsmitteleinspritzanordnung zum Einspritzen von Reaktionsmittel in im Abgasführungskanal strömendes Abgas,
- stromabwärts der Reaktionsmitteleinspritzanordnung eine Mischeranordnung zur Unterstützung der Durchmischung von durch die Reaktionsmitteleinspritzanordnung eingespritztem Reaktionsmittel mit im Abgasführungskanal strömendem Abgas,
- stromabwärts der Reaktionsmitteleinspritzanordnung und stromaufwärts der Mischeranordnung eine im Abgasführungskanal sich erstreckende und von darin strömendem Abgas und durch die Reaktionsmitteleinspritzanordnung eingespritztem Reaktionsmittel umströmbare Reaktionsmittelheizanordnung.

Die vorliegende Erfindung kombiniert den Aspekt einer Unterstützung der Reaktionsmittelverdampfung durch eine im Abgasführungskanal angeordnete Reaktionsmittelheizanordnung mit der stromabwärts durch eine Mischeranordnung erzeugten verstärkten Verwirbelung.

Die Reaktionsmittelheizanordnung umfasst wenigstens ein durch elektrische Erregung erwärmbares und von Abgas und Reaktionsmittel umströmbares, als Heizleiterelement ausgebildetes Heizelement. Im Allgemeinen erwärmt sich ein derartiges Heizleiterelement aufgrund seines ohm'schen Widerstandes. Selbstverständlich kann dabei ein derartiges Heizleiterelement von elektrisch isolierendem Material umgeben sein, um einen elektrischen Kurzschluss zu vermeiden.

Wenigstens ein Heizleiterelement ist bandartig ausgebildet und weist zu einer Abgasströmungsrichtung im Wesentlichen parallele Bandoberfläche auf. Es ist hier darauf hinzuweisen, dass bandartig im Sinne der vorliegenden Erfindung bedeutet, dass das so ausgebildete Heizleiterelement quer zu seiner Längserstreckung im Wesentlichen flach und breitgestreckt ausgebildet ist, so dass ein wesentlicher Anteil der Oberfläche eines so aufgebauten Heizleiterelements durch die beiden Breitseiten desselben bereitgestellt ist.

Ferner ist für eine Vergrößerung der Oberfläche zur thermischen Wechselwirkung wenigstens ein bandartig ausgebildetes Heizleiterelement wenigstens bereichsweise mäanderartig gewunden.

Um die erfindungsgemäß stromaufwärts der Mischeranordnung vorgesehene Reaktionsmittelheizanordnung effizient nutzen zu können, wird vorgeschlagen, dass die Reaktionsmittelheizanordnung sich in dem von einem bei Reaktionsmitteleinspritzung gebildeten Reaktionsmittelsprühkegel erfassten Volumenbereich erstreckt. Es ist hier zu betonen, dass grundsätzlich davon auszugehen ist, dass aufgrund von im Abgasführungskanal strömendem Abgas das aus der Reaktionsmitteleinspritzanordnung abgegebene Reaktionsmittel sich nicht in Form eines exakten geometrischen Kegels ausbreiten wird. Im Sinne der vorliegenden Erfindung wird derjenige Volumenbereich, in welchen hinein das aus der Reaktionsmitteleinspritzanordnung abgegebene Reaktionsmittel zumindest größtenteils abgegeben wird, als Reaktionsmittelsprühkegel bzw. der diesen erfassende Volumenbereich betrachtet.

Vorzugsweise kann ein derartiges Heizleiterelement eine geschlossene Heizleiterschleife bilden, so dass eine vergleichsweise große thermische Wechselwirkungslänge bereitgestellt werden kann.

Um die Effizienz der Reaktionsmittelheizanordnung erhöhen zu können, wird vorgeschlagen, dass eine Mehrzahl bandartig ausgebildeter Heizleiterelemente in Abgasströmungsrichtung aufeinanderfolgend angeordnet ist.

Bei einer alternativen Ausgestaltungsart kann die Reaktionsmittelheizanordnung wenigstens ein durch elektrische Erregung erwärmbares Heizelement und wenigstens ein mit dem Heizelement in Wärmeübertragungsverbindung stehendes im Wesentlichen plattenartiges Wärmeübertragungselement umfassen. Bei dieser Ausgestaltung ist nicht notwendigerweise ein unmittelbarer Kontakt des Reaktionsmittels mit dem Heizelement selbst vorgesehen oder erforderlich. Vielmehr stellt das wenigstens eine plattenartige Wärmeübertragungselement diejenige Oberfläche bereit, welche durch Benetzung mit dem Reaktionsmittel in Kontakt kommt und somit zu dessen Verdampfung beiträgt.

Um den Abgasstrom im Abgasführungskanal möglichst wenig zu beeinträchtigen, wird vorgeschlagen, dass wenigstens ein plattenartiges Wärmeübertragungselement eine zu einer Abgasströmungsrichtung im Wesentlichen parallele Wärmeübertragungselementenoberfläche aufweist.

Zur stabilen Verbindung eines Heizelements mit diesem zugeordneten Wärmeübertragungselementen wird vorgeschlagen, dass wenigstens ein Heizelement zwischen zwei miteinander verbundenen, vorzugsweise wenigstens bereichsweise aneinander anliegenden, plattenartigen Wärmeübertragungselementen gehalten ist.

Dabei kann für einen verbesserten Wärmeübertrag vorgesehen sein, dass zwischen wenigstens einem plattenartigen Wärmeübertragungselement und einem Heizelement ein Wärmeübertragungsmedium, vorzugsweise Metallpulver oder/und Graphitmaterial, angeordnet ist.

Für ein verbessertes Abgasströmungsverhalten kann ferner vorgesehen sein, dass wenigstens ein plattenartiges Wärmeübertragungselement eine Mehrzahl von Abgasdurchtrittsöffnungen oder/und Abgasleitelementen aufweist.

Bei einer insbesondere zum Einsatz in der durch die Abgase und das Reaktionsmittel bereitgestellten aggressiven Umgebung vorteilhaften Ausgestaltung kann vorgesehen sein, dass die Reaktionsmittelheizanordnung wenigstens ein durch elektrische Erregung erwärmbares Keramikheizelement umfasst.

Um dabei eine effiziente thermische Wechselwirkung bereitstellen zu können, wird vorgeschlagen, dass wenigstens ein Keramikheizelement eine Mehrzahl von stabartigen Heizabschnitten umfasst.

Bei einer weiteren vorteilhaften Ausgestaltungsform wird vorgeschlagen, dass die Reaktionsmittelheizanordnung wenigstens ein durch elektrische Erregung erwärmbares Heizelement und einen das Heizelement wenigstens bereichsweise umgebenden porösen Reaktionsmittelaufnahmekörper, vorzugsweise aus Metallschaummaterial oder Drahtgeflecht, umfasst. Der poröse Reaktionsmittelaufnahmekörper kann das zunächst in Tröpfchenform auf diesen auftreffende Reaktionsmittel durch Kapillarwirkung aufnehmen und aufgrund seiner erhöhten Temperatur dann kontinuierlich abgeben, so dass auch eine vergleichmäßigte Reaktionsmittelabgabe gewährleistet ist.

Stromabwärts der Mischeranordnung kann eine Reaktionsmittelbehandlungsanordnung, wie z.B. eine Katalysatoranordnung zur selektiven katalytischen Reduktion oder/und ein Partikelfilter, angeordnet sein.

Bei einer alternativen Ausgestaltung umfasst das Heizelement wenigstens zwei mäanderartig gewundene, in einem Verbindungsbereich aneinander anschließende und im Wesentlichen nebeneinander verlaufende Heizleiterabschnitte.

Bei derartiger Ausgestaltung eines Heizelements wird eine große Wechselwirkungslänge bzw. Wechselwirkungsfläche zur Erwärmung eines in einer Abgasanlage in den Abgasstrom eingespritzten Reaktionsmittels bereitgestellt.

Vorzugsweise kann vorgesehen sein, dass jeder Heizleiterabschnitt in einer Heizleiterabschnittslängsrichtung aufeinanderfolgend eine Mehrzahl von im Wesentlichen quer zur Heizleiterabschnittslängsrichtung alternierend einander entgegengesetzt orientierten Ausbauchungen aufweist, wobei bei wenigstens zwei Heizleiterabschnitten in gleicher Richtung quer zur Heizleiterabschnittslängsrichtung orientierte Ausbauchungen in der Heizleiterabschnittslängsrichtung zueinander versetzt sind. Bei derartiger Ausgestaltung kann gewährleistet werden, dass durch das Vermeiden einer deckungsgleichen Positionierung der Heizleiterabschnitte alle Oberflächenbereiche derselben effizient umströmt und somit zur Erwärmung des Reaktionsmittels genutzt werden können.

Eine große zur Erwärmung zur Verfügung stehende Oberfläche kann bei einer bevorzugten Ausgestaltung dadurch bereitgestellt werden, dass die Heizleiterabschnitte mit dem diese verbindenden Verbindungsbereich bandartig ausgebildet sind.

Um dabei für das in einer Abgasanlage strömende Abgas einen möglichst geringen Strömungswiderstand zu erzeugen, wird vorgeschlagen, dass an Breitseiten der Heizleiterabschnitte bereitgestellte Bandoberflächen der Heizleiterabschnitte zueinander im Wesentlichen parallel orientiert sind.

Bei dem Heizleiterelement können zwei Heizleiterabschnitte in einem jeweiligen ersten Endbereich einen Anschlussbereich zur elektrischen Kontaktierung aufweisen und in einem jeweiligen zweiten Endbereich über einen Verbindungsbereich an einen anderen Heizleiterabschnitt anschließen.

Die vorliegende Erfindung wird nachfolgend mit Bezug auf die beiliegenden Figuren detailliert beschrieben. Es zeigt:
- Fig. 1: einen Abschnitt einer Abgasanlage mit einer Reaktionsmitteleinspritzanordnung, stromabwärts der Reaktionsmitteleinspritzanordnung einer Mischeranordnung und dazwischen einer Reaktionsmittelheizanordnung;
- Fig. 2: ein elektrisch erregbares Heizleiterelement der Reaktionsmittelheizanordnung in Fig. 1 (nicht erfindungsgemäß);

- Fig. 3: ein erfindungsgemäß, bandartig und mit mäanderartiger Struktur ausgebildetes elektrisch erregbares Heizleiterelement;
- Fig. 4: einen Abschnitt eines Abgasführungskanals mit einem im Sprühkegel des Reaktionsmittels angeordneten Heizleiterelement gemäß Fig. 3;
- Fig. 5: das Heizleiterelement der Fig. 3 mit dem durch dieses hindurchgeleiteten Abgasstrom;
- Fig. 6: eine alternative Ausgestaltungsart eines erfindungsgemäß, bandartig ausgebildeten und mit mäanderartiger Struktur bereitgestellten Heizleiterelements;
- Fig. 7: in ihren Darstellungen a) und b) in prinzipartiger Darstellung ein bzw. mehrere nebeneinander angeordnete, mäanderartig ausgebildete Heizleiterelemente und in ihrer Darstellung c) ein Heizleiterelement mit mehreren nebeneinander angeordneten, mäanderartig ausgebildeten Heizleiterabschnitten;

- Fig. 8: eine der Fig. 1 entsprechende Ansicht einer alternativen Ausgestaltungsform einer Abgasanlage (nicht erfindungsgemäß);

- Fig. 9: eine Draufsicht auf eine bei der Ausgestaltungsform der Fig. 8 eingesetzte Reaktionsmittelheizanordnung (nicht erfindungsgemäß);

- Fig. 10: eine Stirnansicht der Reaktionsmittelheizanordnung der Fig. 9 in Blickrichtung X in Fig. 9;
- Fig. 11: eine der Fig. 10 entsprechende Ansicht einer alternativen Ausgestaltungsart (nicht erfindungsgemäß);
- Fig. 12: eine weitere der Fig. 1 entsprechende Ansicht einer alternativ ausgetalteten Abgasanlage (nicht erfindungsgemäß);
- Fig. 13: eine Ausgestaltungsart einer Reaktionsmittelheizanordnung mit mehreren stabartigen Heizabschnitten eines Keramikelements (nicht erfindungsgemäß);

- Fig. 14: eine Ansicht der Reaktionsmittelheizanordnung der Fig. 13 in Blickrichtung XIV in Fig. 13 (nicht erfindungsgemäß);
- Fig. 15: eine weitere der Fig. 1 entsprechende Darstellung einer alternativen Ausgestaltungsart einer Abgasanlage (nicht erfindungsgemäß).

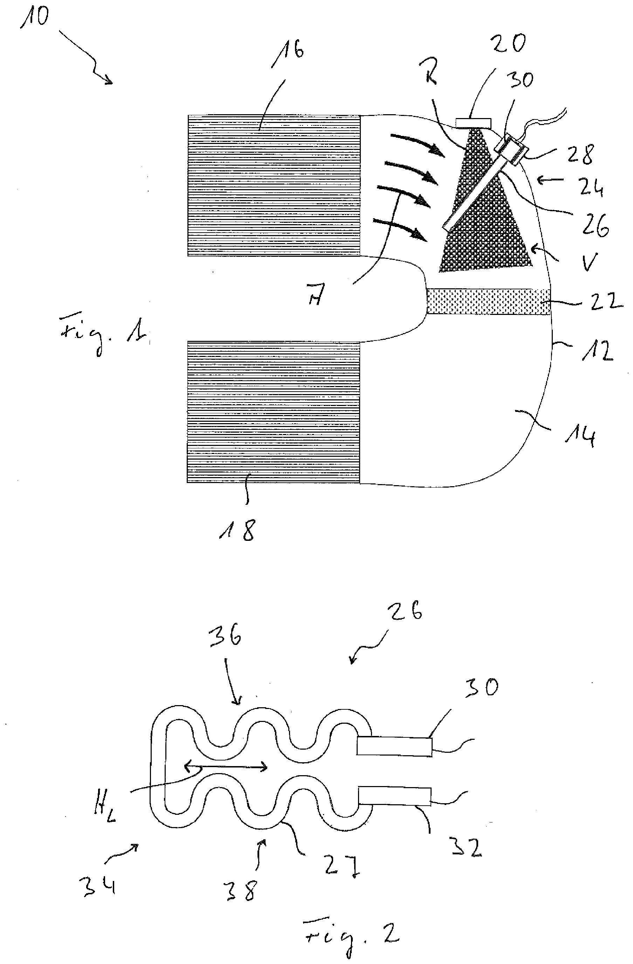

In Fig. 1 ist in prinzipartiger Darstellung ein Abschnitt einer Abgasanlage 10 beispielsweise für eine Brennkraftmaschine eines Fahrzeugs dargestellt. Die Abgasanlage 10 umfasst in einem Abgasrohr 12 einen allgemein mit 14 bezeichneten Abgasführungskanal. In einem stromaufwärtigen Bereich des in Fig. 1 dargestellten Abschnitts kann eine erste Abgasbehandlungsanordnung 16 vorgesehen sein, die beispielsweise als Dieseloxidationskatalysator bzw. als Mager-NOx-Falle ausgebildet sein kann. In einem stromabwärtigen Bereich des dargestellten Abschnitts der Abgasanlage 10 kann eine zweite Abgasbehandlungsanordnung 18 vorgesehen sein: Diese kann beispielsweise eine Katalysatoranordnung zur selektiven katalytischen Reduktion bzw. einen Partikelfilter umfassen.

In dem zwischen den beiden Abgasbehandlungsanordnungen 16, 18 liegenden Abschnitt des Abgasführungskanals 14 ist eine allgemein auch als Injektor bezeichnete Reaktionsmitteleinspritzanordnung 20 vorgesehen. Diese spritzt ein Reaktionsmittel, beispielsweise ein Harnstoff/Wasser-Gemisch, in den Abgasführungskanal 14 ein, um eine Durchmischung des so eingespritzten Reaktionsmittels R mit dem im Abgasführungskanal strömenden Abgas A zu erreichen.

Stromabwärts der Reaktionsmitteleinspritzanordnung 20 ist im Abgasführungskanal 14 eine Mischeranordnung 22 vorgesehen. Diese dient dazu, eine verbesserte Durchmischung des Reaktionsmittels R mit dem Abgas A zu erreichen und kann eine Mehrzahl von bezüglich der Abgasströmungsrichtung schräg angestellten und somit für eine Strömungsverwirbelung sorgenden Ablenkflächen umfassen. Da die Mischeranordnung 22 von dem vergleichsweise heißen Abgas A umströmt wird, wird sie durch dieses auch erwärmt, so dass das zunächst noch in Tröpfchenform auf die Ablenkflächen der Mischeranordnung 22 auftreffende Reaktionsmittel R durch die Mischeranordnung 22 selbst erwärmt und somit verstärkt verdampft wird.

In Abgasströmungsrichtung stromabwärts der Reaktionsmitteleinspritzanordnung 20 und stromaufwärts der Mischeranordnung 22 ist eine Reaktionsmittelheizanordnung 24 vorgesehen. Diese umfasst ein durch elektrische Erregung erwärmbares Heizelement 26, das über einen Träger 28 und eine Isolationsanordnung 30, beispielsweise Glimmer oder dergleichen, am Abgasrohr 12 getragen ist. Das Heizelement 26 erstreckt sich in den durch den vermittels der Reaktionsmitteleinspritzanordnung 20 ausgebildeten Sprühkegel des Reaktionsmittels R eingenommenen Volumenbereich V hinein und steht somit nahezu mit seiner gesamten Erstreckungslänge zur thermischen Wechselwirkung mit dem im Abgasführungskanal 14 strömenden Abgas A zur Verfügung.

Ein Beispiel eines derartigen durch elektrische Erregung erwärmbaren Heizelements 26 ist in Fig. 2 gezeigt. Das Heizelement 26 ist als Heizleiterelement 27 ausgebildet und bildet zwischen zwei Anschlussbereichen 30, 32, die über den in Fig. 1 dargestellten Träger 28 am Abgasrohr 12 getragen sein können, eine geschlossene Schleife 34 mit zwei nebeneinander liegenden und mäanderartig gewundenen, also im Wesentlichen mit ondulierter bzw. wellenartiger Struktur bereitgestellten Schleifenabschnitten bzw. Heizleiterabschnitten 36, 38. Das Heizleiterelement 27 kann einen aufgrund seines ohm'sehen Widerstandes bei elektrischer Erregung erwärmbaren Kernbereich umfassen, der von einem elektrisch isolierenden Mantel umgeben ist. Selbstverständlich kann das Heizleiterelement 27 andere Profilierungen aufweisen, als in Fig. 2 dargestellt. Grundsätzlich kann es mit V-Profil oder U-Profil ausgebildet sein, wobei die in Fig. 2 dargestellte Konfiguration als geschlossene Schleife mit mäanderartigen Schleifenabschnitten aufgrund der vergleichsweise großen Wechselwirkungslänge mit dem durch die Reaktionsmitteleinspritzanordnung 20 abgegebenen Reaktionsmittel R besonders vorteilhaft ist.

Man erkennt bei der in Figur 2 dargestellten Ausgestaltung eines Heizleiterelements 27, dass jeder der beiden Heizleiterabschnitte 36, 38 auf Grund seiner mäanderartigen Struktur eine Mehrzahl von in einer Heizleiterabschnittslängsrichtung H_{L} aufeinanderfolgenden und alternierend quer zur Heizleiterabschnittslängsrichtung H_{L} entgegengesetzt orientierten Ausbauchungen aufweist. Dabei liegen die quer zur Heizleiterabschnittslängsrichtung H_{L} gleich orientierten Ausbauchungen der beiden Heizleiterabschnitte 36, 38 in der Heizleiterabschnittslängsrichtung H_{L} zueinander versetzt

Durch das Heizelement 26 bzw. Heizleiterelement 27 wird das dieses umströmende Reaktionsmittel R erwärmt und zumindest teilweise verdampft. Das in diesem bereits verdampften bzw. erwärmten Zustand auf die Mischeranordnung 22 auftreffende Reaktionsmittel R kann in der Mischeranordnung 22 aufgrund des vorangehend bereits beschriebenen Effekts weiter erwärmt und somit vollständig verdampft werden und mit dem im Abgasführungskanal 14 strömenden Abgas A vollständig und gleichmäßig vermischt werden.

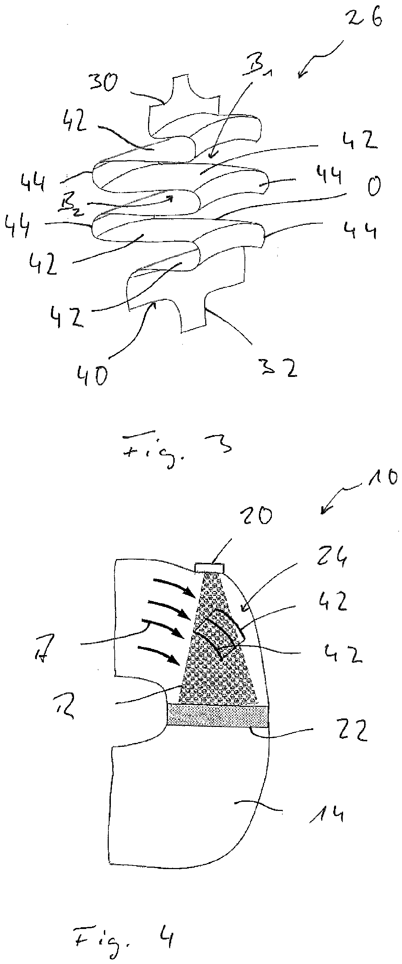

Eine alternative Ausgestaltung der Reaktionsmittelheizanordnung 24 ist in den Fig. 3 bis 7 dargestellt. Die Fig. 3 zeigt ein durch elektrische Erregung erwärmbares Heizelement 26, das als bandartiges Heizleiterelement 40 bereitgestellt ist, beispielsweise als Metallband ggf. mit elektrischer Isolierung. Das Heizelement 26 bzw. das Heizleiterelement 40 ist zwischen seinen beiden zur elektrischen Kontaktierung vorgesehenen Anschlussbereichen 30, 32 mit mäanderartiger Struktur bereitgestellt und weist somit eine Mehrzahl von im Wesentlichen parallel zueinander liegenden Längenabschnitten 42 auf, die in jeweiligen Krümmungsbereichen 44 aneinander anschließen.

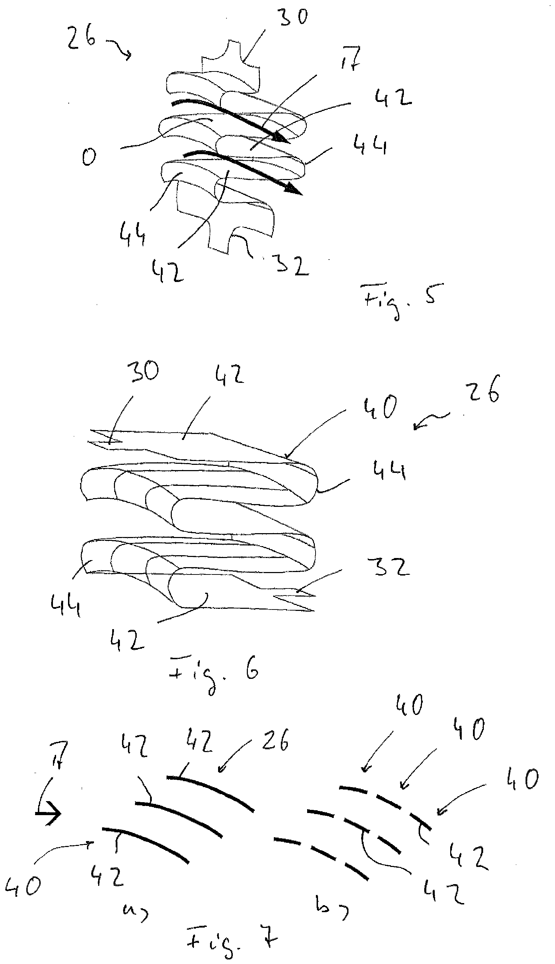

Die im Wesentlichen durch die beiden voneinander abgewandt liegenden Breitseiten B₁, B₂ des Heizleiterelements 40 bereitgestellte Bandoberfläche O ist insbesondere in den Längenabschnitten 42 und in Krümmungsbereichen 44 so orientiert, dass sie, wie die Fig. 5 dies andeutet, im Wesentlichen parallel zur Strömungsrichtung des Abgases A liegt. Somit wird eine Beeinträchtigung der Strömung des Abgases A insbesondere im Bereich des durch den Sprühkegel des Reaktionsmittels R eingenommenen Volumenbereichs V weitestgehend vermieden. Gleichzeitig stellt das mit seiner mäanderartigen Struktur bereitgestellte Heizleiterelement 40 eine vergleichsweise große Oberfläche O bereit, auf welche das durch die Reaktionsmitteleinspritzanordnung 20 abgegebene Reaktionsmittel R auftreffen kann und somit Wärme aufnehmen kann. Dabei ist die Anordnung des Heizleiterelements 40 vorzugsweise derart, dass das durch die Reaktionsmitteleinspritzanordnung 20 abgegebene Reaktionsmittel R eine Strömungsrichtungskomponente parallel zur Oberfläche O aufweist, so dass es in die zwischen den Abschnitten 42 gebildete Zwischenräume eintreten und somit auf die Oberfläche O auftreffen kann.

Eine insbesondere hinsichtlich der Positionierung anders gestaltete Ausgestaltung des Heizelements 26 bzw. des Heizleiterelements 40 ist in Fig. 6 dargestellt. Man erkennt, dass bei dieser Ausgestaltungsform die beiden Anschlussbereiche 30, 32, anders als bei der Ausgestaltungsform gemäß Fig. 3, nicht in einer gemeinsamen Ebene und voneinander weg orientiert liegen, sondern in zueinander versetzt liegenden Ebenen und die beiden letzten Bandabschnitte 42 im Wesentlichen geradlinig fortsetzend angeordnet sind.

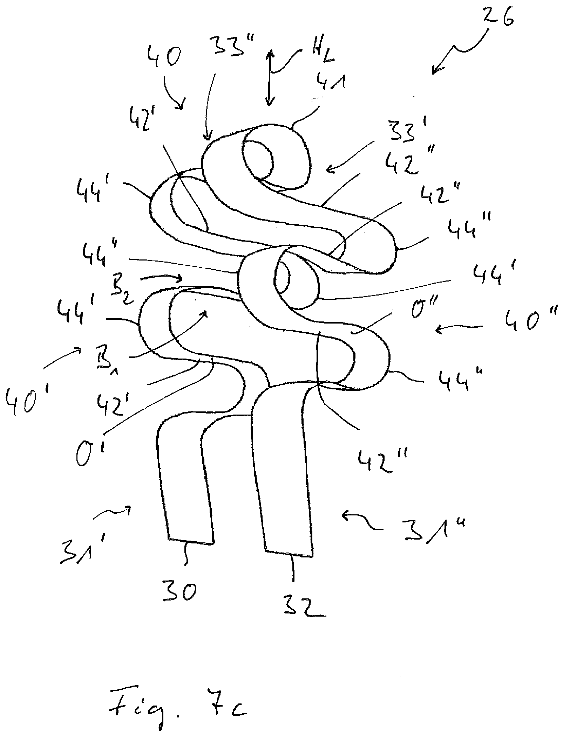

Die Fig. 7 veranschaulicht in prinzipartiger Darstellung verschiedene Ausgestaltungen der Heizanordnung 24. Die Darstellung der Fig. 7a) entspricht im Wesentlichen der Ausgestaltungsform gemäß Fig. 3 oder Fig. 6 mit einem das Heizelement 26 bereitstellenden Heizleiterelement 40, das im dargestellten Beispiel drei zueinander im Wesentlichen parallel orientierte Bandabschnitte 42 aufweist. In Fig. 7b) sind drei derartige Heizleiterelemente 40 vorgesehen, welche im Wesentlichen in der Strömungsrichtung des Abgases A aufeinander folgend liegen und beispielsweise jeweils ebenfalls drei zueinander im Wesentlichen parallel orientierte Längenabschnitte 42 aufweisen. Die in der Strömungsrichtung des Abgases A aufeinander folgenden Heizleiterelemente 40 sind vorzugsweise derart positioniert, dass deren Längenabschnitte 42 zur Verringerung des Strömungswiderstandes für das im Abgasführungskanal 14 strömende Abgas A einander in der Strömungsrichtung fortsetzend, also im Wesentlichen in Flucht zueinander, angeordnet sind.

Die Fig. 7c zeigt ein als bandartig ausgebildetes Heizleiterelement 40 bereitgestelltes Heizelement 26. Das Heizleiterelement 40 weist zwei Heizleiterabschnitte 40', 40" auf, die in der Heizleiterabschnittslängsrichtung H_{L} im Wesentlichen nebeneinander verlaufen und jeweils mäanderartig gewunden, also mit im Wesentlichen wellenartiger Struktur bereitgestellt sind. Im Bereich der jeweiligen Krümmungsbereiche 44', 44" der Heizleiterabschnitte 40', 40" sind im Wesentlichen quer zur Heizleiterabschnittslängsrichtung H_{L} alternierend voneinander weg orientierte Ausbauchungen gebildet, zwischen welchen die Längenabschnitte 42', 42" sich erstrecken.

In jeweiligen ersten Endbereichen 31', 31" weisen die beiden nebeneinander liegenden Heizleiterabschnitte 40', 40" jeweils einen Anschlussbereich 30, 32 auf. In jeweiligen zweiten Endbereichen 33', 33" schließen die beiden Heizleiterabschnitte 40', 40" über einen Verbindungsbereich 41 aneinander an und bilden somit eine integrale Struktur des Heizleiterelements 40. Die beiden Anschlussbereiche 30, 32 liegen somit direkt nebeneinander und können in einfacher Art und Weise mit entsprechend geformten Gegen-Anschlussbereichen, beispielsweise an einem Abgasführungsrohr, elektrisch kontaktiert werden.

Die an jeweiligen Breitseiten B₁, B₂ gebildeten Oberflächen O', O" der Heizleiterabschnitte 40', 40" sind im Wesentlichen parallel zueinander orientiert, so dass für das das Heizelement 40 umströmende Abgas A ein sehr geringerer Strömungswiderstand besteht, während gleichzeitig eine vergleichsweise große Oberfläche zur Erwärmung des in das Abgas A eingespritzten Reaktionsmittels R zur Verfügung steht. Um die Oberfläche möglichst effizient nutzen zu können, sind auch bei diesem Heizleiterelement 40 die im Bereich der Krümmungsbereiche 44', 44" gebildeten Ausbauchungen der beiden Heizleiterabschnitte 40', 40" in der Heizleiterabschnittslängsrichtung H_{L} zueinander versetzt, so dass z.B. im Wesentlichen dort, wo bei einem der Heizleiterabschnitte 40', 40" eine Ausbauchung in einer ersten Richtung quer zur Heizleiterabschnittslängsrichtung H_{L} orientiert ist, im gleichen Längenbereich des anderen Heizleiterabschnitts eine Ausbauchung in einer der ersten Richtung entgegengesetzten zweiten Richtung quer zur Heizleiterabschnittslängsrichtung H_{L} orientiert ist. Die beiden Heizleiterabschnitte 40', 40" weisen somit einen phasenverschobenen Verlauf zueinander auf, wobei die Phasenverschiebung im Bereich der Hälfte der Wellenlänge der mäanderartigen bzw. wellenartigen Struktur liegen kann aber auch andere Werte annehmen kann. Daher liegen, betrachtet in der Strömungsrichtung des Abgases A, nicht deckungsgleich. Vorzugsweise liegen dabei auch die zwischen jeweiligen Ausbauchungen bzw. Krümmungsbereichen 44', 44" sich erstreckenden Längenbereiche 42', 42" der verschiedenen Heizleiterabschnitte 40', 40" in der Heizleiterabschnittslängsrichtung H_{L} zueinander versetzt. Auf diese Art und Weise ist dafür gesorgt, dass der weiter stromabwärts positionierte Heizleiterabschnitt nicht durch den weiter stromaufwärts positionierten Heizleiterabschnitt abgeschirmt ist.

Mit dem in Fig. 7c) dargestellten Heizleiterelement 40 kann grundsätzlich eine Struktur aufgebaut werden, wie sie in Figur 7b) angedeutet ist, wobei nicht einzelne voneinander getrennt ausgebildete Heizleiterelemente, sondern Heizleiterabschnitte eines Heizleiterelements in der Strömungsrichtung des Abgases A aufeinander folgen. Grundsätzlich können auch mehrere derartige Heizleiterelemente 40, wie in Fig. 7c) dargestellt, aufeinanderfolgend angeordnet sein. Auch kann ein derartiges mehrere Heizleiterabschnitte umfassendes Heizleiterelement mit mehr als zwei Heizleiterabschnitten aufgebaut sein. Beispielsweise können drei im Wesentlichen nebeneinander liegende Heizleiterabschnitte vorgesehen sein, wobei dann die beiden Anschlussbereiche nicht nebeneinander, sondern an einander entgegengesetzten Seiten liegen.

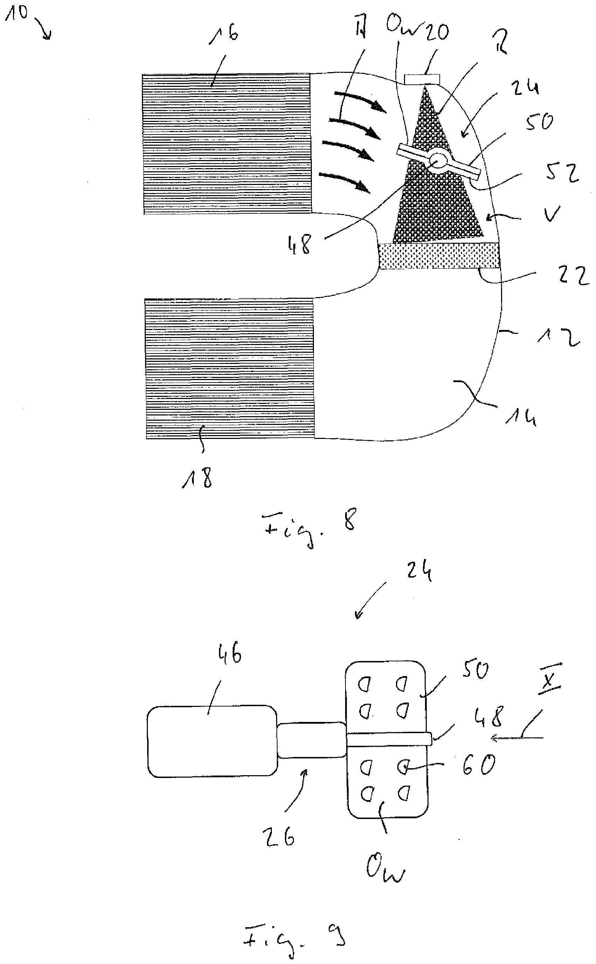

Die Fig. 8 bis 11 zeigen eine weitere alternative Ausgestaltungsart einer Reaktionsmittelheizanordnung 24. Bei dieser Ausgestaltungsart umfasst die Reaktionsmittelheizanordnung 24 ein beispielsweise als Glühstift ausgebildetes Heizelement 26, das mit einem Körperbereich 46 beispielsweise am Abgasrohr 12 getragen ist und mit einem durch elektrische Erregung erwärmbaren Heizbereich bzw. Glühbereich 48 in den Abgasführungskanal 14 ragt. An diesem Heizbereich 48 sind in dem in den Fig. 8 bis 10 dargestellten Beispiel zwei plattenartige Wärmeübertragungselemente 50, 52 getragen. Die beiden Wärmeübertragungselemente 50, 52 sind so geformt, dass sie in ihrem den Heizbereich 48 umgebenden, näherungsweise im Längenmittenbereich derselben liegenden Abschnitt eine jeweils im Wesentlichen halbkreisförmige Ausformung 54, 56 bilden, so dass ein Volumenbereich gebildet ist, in welchem der Heizbereich 48 beispielsweise unter Zwischenlagerung eines Wärmeübertragungsmediums 58, wie z. B. Metallpulver oder Graphitfolie, aufgenommen ist. Die beiden Wärmeübertragungselemente 50, 52 können aneinander beispielsweise durch Verpressung, Verschweißung oder dergleichen festgelegt sein und somit stabil am Heizbereich 48 getragen sein. Zur Verringerung des Strömungswiderstands und zur verbesserten Durchmischung des durch die Reaktionsmitteleinspritzanordnung 20 abgegebenen Reaktionsmittels R mit dem im Abgasführungskanal 14 strömenden Abgas A können in den Wärmeübertragungselementen 50, 52 Abgasdurchtrittsöffnungen 60 ausgebildet sein, wobei beispielsweise angrenzend an diese Abgasdurchtrittsöffnungen 60 Abgasleitelemente beispielsweise durch Ausbiegen von Abschnitten der Wärmeübertragungselemente 50, 52 bereitgestellt sein können.

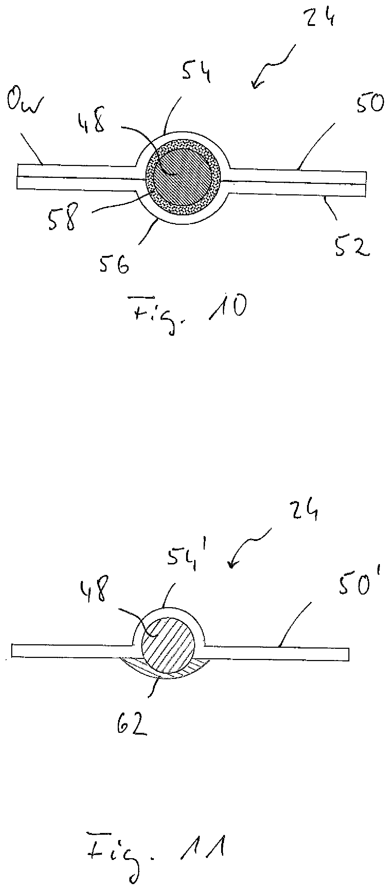

Eine alternative Ausgestaltung ist in Fig. 11 gezeigt. Bei dieser Ausgestaltung ist nur ein einziges plattenartiges Wärmeübertragungselement 50' mit einer kreisförmigen Ausformung 54' vorgesehen, welche das Heizelement 26 in seinem Heizbereich 48 umgebend angeordnet ist. Zur stabilen Halterung kann in dem nicht von der Ausformung 54' umgebenen Bereich das Heizelement 48 mit dem Wärmeübertragungselement 50 beispielsweise durch Verschweißung 62 fest verbunden sein.

Auch bei der in den Fig. 8 bis 11 dargestellten Ausgestaltungsform ist die Reaktionsmittelheizanordnung mit ihren zur Wärmeübertragung dienenden plattenartigen Wärmeübertragungselementen 50, 52 bzw. 50' so orientiert, dass die durch diese bereitgestellte Wärmeübertragungselementenoberfläche Ow im Wesentlichen parallel zur Strömungsrichtung des Abgases A im Abgasführungsstrom 14 orientiert ist, um somit einen möglichst geringen Strömungswiderstand für das Abgas A bereitzustellen.

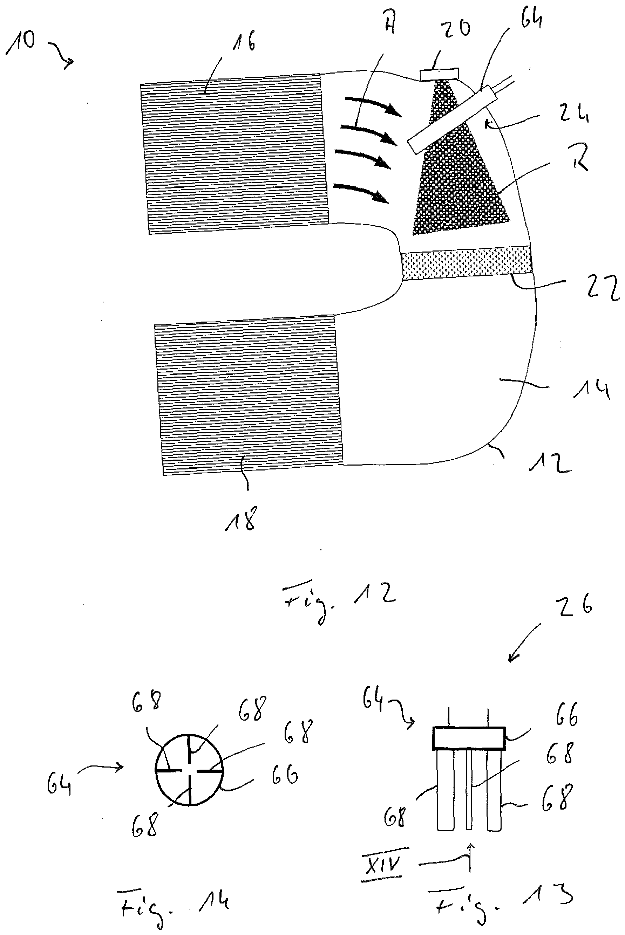

Eine weitere alternative Ausgestaltungsart einer Reaktionsmittelheizanordnung 24 ist in den Fig. 12 bis 14 gezeigt.

Die Reaktionsmittelheizanordnung 24 umfasst ein durch elektrische Erregung erwärmbares Heizelement 26, welches in diesem Falle als Keramikheizelement 64 ausgebildet ist. Dieses umfasst einen beispielsweise am Abgasführungsrohr 12 festgelegten Träger 66 und eine Mehrzahl von, im dargestellten Beispiel vier, von dem Träger 66 sich in den Volumenbereich V hineinerstreckenden stabartigen Heizabschnitte 68. Diese können zur effizienten thermischen Wechselwirkung mit dem Reaktionsmittel R in einer in Fig. 14 veranschaulichten sternartigen Konfiguration bezüglich einander angeordnet sein.

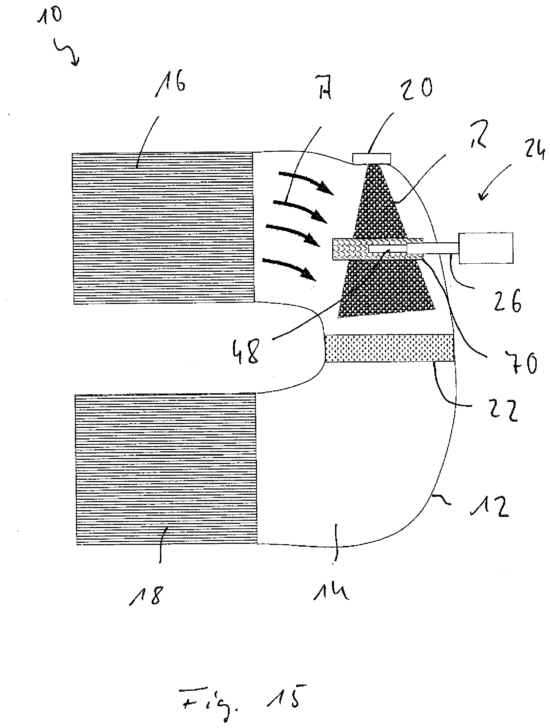

Eine weitere Ausgestaltungsart einer Reaktionsmittelheizanordnung 24 ist in Fig. 15 gezeigt. Die Reaktionsmittelheizanordnung 24 umfasst ein Heizelement 26, das hinsichtlich seines Aufbaus im Wesentlichen dem in Fig. 9 dargestellten Heizelement 26 entsprechen kann und einen durch elektrische Erregung erwärmbaren und insbesondere im Bereich des Volumenbereichs V sich erstreckenden Heizbereich 48 aufweisen kann. Der Heizbereich 48 ist durch eine Reaktionsmittelaufnahmekörper 70 aus porösem Material umgeben. Das von der Reaktionsmitteleinspritzanordnung 20 abgegebene Reaktionsmittel R trifft auf die Oberfläche des porösen Reaktionsmittelaufnahmekörpers 70 auf und kann durch Kapillarförderwirkung in dessen Innenvolumenbereich eintreten. Der Reaktionsmittelaufnahmekörper 70 bildet somit einen Reaktionsmittelspeicher, in welchem das Reaktionsmittel erwärmt wird und in Dampfform abgegeben wird. Dies führt zu einer Vergleichmäßigung des in Dampfform in den Strom des Abgases A abgegebenen und durch die Mischeranordnung 22 dann vollständig mit dem Abgas A vermischten Reaktionsmittelstroms.

Der Reaktionsmittelaufnahmekörper 70 ist vorzugsweise aus Metallschaummaterial oder anderem porösen Material, wie z. B. Drahtgeflecht, aufgebaut.

Es sei abschließend darauf hingewiesen, dass selbstverständlich eine Abgasanlage auch mehrere der vorangehend beschriebenen Reaktionsmittelheizanordnungen verschiedener Bauart in Kombination umfassen kann.

## Patentansprüche

1. Abgasanlage, insbesondere für eine Brennkraftmaschine eines Fahrzeugs, umfassend
- einen Abgasführungskanal (14),
- eine Reaktionsmitteleinspritzanordnung (20) zum Einspritzen von Reaktionsmittel (R) in im Abgasführungskanal (14) strömendes Abgas (A),
- stromabwärts der Reaktionsmitteleinspritzanordnung (20) eine Mischeranordnung (22) zur Unterstützung der Durchmischung von durch die Reaktionsmitteleinspritzanordnung (20) eingespritztem Reaktionsmittel (R) mit im Abgasführungskanal (14) strömendem Abgas (A),
- stromabwärts der Reaktionsmitteleinspritzanordnung (20) und stromaufwärts der Mischeranordnung (22) eine im Abgasführungskanal (14) sich erstreckende und von darin strömendem Abgas (A) und durch die Reaktionsmitteleinspritzanordnung (20) eingespritztem Reaktionsmittel (R) umströmbare Reaktionsmittelheizanordnung (24),
wobei die Reaktionsmittelheizanordnung (24) wenigstens ein durch elektrische Erregung erwärmbares und von Abgas (A) und Reaktionsmittel (R) umströmbares Heizelement (26) umfasst,
**dadurch gekennzeichnet, dass** wenigstens ein Heizelement (40) als Heizleiterelement bandartig und wenigstens bereichsweise mäanderartig gewunden ausgebildet ist und eine zu einer Abgasströmungsrichtung im Wesentlichen parallele Bandoberfläche (O) aufweist.

2. Abgasanlage nach Anspruch 1, **dadurch gekennzeichnet, dass** die Reaktionsmittelheizanordnung (24) sich in dem von einem bei Reaktionsmitteleinspritzanordnung gebildeten Reaktionsmittelsprühkegel erfassten Volumenbereich (V) erstreckt.

3. Abgasanlage nach Anspruch 1 oder 2, **dadurch gekennzeichnet, dass** wenigstens ein Heizleiterelement (27) eine geschlossene Heizleiterschleife (34) bildet.

4. Abgasanlage nach Anspruch 1, 2 oder3, **dadurch gekennzeichnet, dass** eine Mehrzahl bandartig ausgebildeter Heizleiterelemente (40) in Abgasströmungsrichtung aufeinanderfolgend angeordnet ist.

5. Abgasanlage nach einem der Ansprüche 1-4, **dadurch gekennzeichnet, dass** die Reaktionsmittelheizanordnung (24) wenigstens ein durch elektrische Erregung erwärmbares Heizelement (26) und wenigstens ein mit dem Heizelement (26) in Wärmeübertragungsverbindung stehendes im Wesentlichen plattenartiges Wärmeübertragungselement (50, 52; 50') umfasst.

6. Abgasanlage nach Anspruch 5, **dadurch gekennzeichnet, dass** wenigstens ein plattenartiges Wärmeübertragungselement (50, 52; 50') eine zu einer Abgasströmungsrichtung im Wesentlichen parallele Wärmeübertragungselementenoberfläche (O_{W}) aufweist.

7. Abgasanlage nach Anspruch 5 oder 6, **dadurch gekennzeichnet, dass** wenigstens ein Heizelement (26) zwischen zwei miteinander verbundenen, vorzugsweise wenigstens bereichsweise aneinander anliegenden, plattenartigen Wärmeübertragungselementen (50, 52) gehalten ist.

8. Abgasanlage nach einem der Ansprüche 5-7, **dadurch gekennzeichnet, dass** zwischen wenigstens einem plattenartigen Wärmeübertragungselement (50, 52) und einem Heizelement (26) ein Wärmeübertragungsmedium (58), vorzugsweise Metallpulver oder/und Graphitmaterial, angeordnet ist.

9. Abgasanlage einem der Ansprüche 5-7, **dadurch gekennzeichnet, dass** wenigstens ein plattenartiges Wärmeübertragungselement (50, 52; 50') eine Mehrzahl von Abgasdurchtrittsöffnungen (60) oder/und Abgasleitelementen aufweist.

10. Abgasanlagenach einem der Ansprüche 1-9, **dadurch gekennzeichnet, dass** die Reaktionsmittelheizanordnung (24) wenigstens ein durch elektrische Erregung erwärmbares Keramikheizelement (64) umfasst.

11. Abgasanlage nach Anspruch 10, **dadurch gekennzeichnet, dass** wenigstens ein Keramikheizelement (64) eine Mehrzahl von stabartigen Heizabschnitten (68) umfasst.

12. Abgasanlage nach einem der Ansprüche 1-11, **dadurch gekennzeichnet, dass** die Reaktionsmittelheizanordnung (24) wenigstens ein durch elektrische Erregung erwärmbares Heizelement (26) und einen das Heizelement (26) wenigstens bereichsweise umgebenden porösen Reaktionsmittelaufnahmekörper (70), vorzugsweise aus Metallschaummaterial oder Drahtgeflecht, umfasst.

13. Abgasanlage nach einem der Ansprüche 1-12, **dadurch gekennzeichnet, dass** stromabwärts der Mischeranordnung (22) eine Reaktionsmittelbehandlungsanordnung (18), vorzugsweise Katalysatoranordnung zur selektiven katalytischen Reaktion oder/und Partikelfilter, angeordnet ist.

## Claims

1. Exhaust system, in particular for an internal combustion engine of a vehicle, comprising
- an exhaust gas-carrying duct (14),
- a reactant injection device (20) for injecting reactant (R) into exhaust gas (A) flowing in the exhaust gas-carrying duct (14),
- upstream of the reactant injection device (20), a mixer device (22) for supporting the mixing of reactant (R) injected by the reactant injection device (20) with exhaust gas (A) flowing in the exhaust gas-carrying duct (14), and,
- downstream of the reactant injection device (20) and upstream of the mixer device (22), a reactant heating device (24), which extends in the exhaust gas-carrying duct (14) and around which exhaust gas (A) flowing in said duct and reactant (R) injected by the reactant injection device (20) can flow,
wherein the reactant heating device (24) comprises at least one heating element (26), which can be heated by electrical energization and around which exhaust gas (A) and reactant (R) can flow,
**characterized in that** at least one heating element (40) as a heat conductor element has a band-like configuration and is wound in a meandering pattern in at least some areas and has a band surface (O) that is essentially parallel to an exhaust gas flow direction.

2. Exhaust system in accordance with claim 1, **characterized in that** the reactant heating device (24) extends in the volume area (V) covered by a reactant spray cone formed at the reactant injection device.

3. Exhaust system in accordance with claim 1 or 2, **characterized in that** at least one heat conductor element (27) forms a closed heat conductor loop (34).

4. Exhaust system in accordance with claim 1, 2 or 3, **characterized in that** a plurality of band-like heat conductor elements (40) are arranged following one another in the exhaust gas flow direction.

5. Exhaust system in accordance with one of the claims 1-4, **characterized in that** the reactant heating device (24) comprises at least one heating element (26) that can be heated by electrical energization and at least one essentially plate-shaped heat transmission element (50, 52; 50'), which is in heat transmission connection with the heating element (26).

6. Exhaust system in accordance with claim 5, **characterized in that** at least one plate-shaped heat transmission element (50, 52; 50') has a heat transmission element surface (O_{W}) that is essentially parallel to an exhaust gas flow direction.

7. Exhaust system in accordance with claim 5 or 6, **characterized in that** at least one heating element (26) is held between two plate-shaped heat transmission elements (50, 52), which are connected to one another and are preferably in contact with one another in at least some areas.

8. Exhaust system in accordance with one of the claims 5-7, **characterized in that** a heat transmission medium (58), preferably metal powder or/and graphite material, is arranged between at least one plate-shaped heat transmission element (50, 52) and a heating element (26).

9. Exhaust system in accordance with one of the claims 5-7, **characterized in that** at least one plate-shaped heat transmission element (50, 52; 50') has a plurality of exhaust gas passage openings (60) or/and exhaust gas guide elements.

10. Exhaust system in accordance with one of the claims 1-9, **characterized in that** the reactant heating device (24) comprises at least one ceramic heating element (64) that can be heated by electrical energization.

11. Exhaust system in accordance with claim 10, **characterized in that** at least one ceramic heating element (64) comprises a plurality of rod-shaped heating sections (68).

12. Exhaust system in accordance with one of the claims 1-11, **characterized in that** the reactant heating device (24) comprises at least one heating element (26) that can be heated by electrical energization and a porous reactant receiving body (70), preferably one made of metal foam material or wire mesh, which surrounds the heating element (26) in at least some areas.

13. Exhaust system in accordance with one of the claims 1-12, **characterized in that** a reactant treatment device (18), preferably a catalytic converter device for selective catalytic reaction or/and a particle filter, is arranged downstream of the mixer device (22).

## Revendications

1. Système d'échappement, en particulier pour un moteur à combustion interne d'un véhicule, comprenant
- un canal de guidage de gaz d'échappement (14),
- un arrangement d'injection de réactif (20) pour injecter du réactif (R) dans le gaz d'échappement (A) passant par le canal de guidage de gaz d'échappement (14),
- en aval de l'arrangement d'injection de réactif (20) un arrangement de mélangeur (22) pour faciliter le mélange de réactif injecté par l'arrangement d'injection de réactif (20) avec du gaz d'échappement (A) passant par le canal de guidage de gaz d'échappement (14),
- en amont de l'arrangement d'injection de réactif (20) et en amont de l'arrangement de mélangeur (22), un arrangement de chauffage de réactif (24) s'étendant dans le canal de guidage de gaz d'échappement (14) autour duquel le flux de gaz d'échappement (A) et le réactif (R) injecté par l'arrangement d'injection de réactif (20) peuvent passer,
où l'arrangement de chauffage de réactif (24) comprend au moins un élément de chauffage (26) qui peut être chauffé par une excitation électrique et autour duquel le flux de gaz d'échappement (A) et le réactif (R) peuvent passer,
**caractérisé en ce qu'**au moins un élément de chauffage (40) en tant qu'élément conducteur de chaleur a une configuration en forme de bande, est adapté en tournant au moins en partie en serpentin et comprend une surface de bande (O) essentiellement parallèle à un sens du flux du gaz d'échappement.

2. Système d'échappement selon la revendication 1, **caractérisé en ce que** l'arrangement de chauffage de réactif (24) s'étend dans la région de volume (V) couverte par un cône de pulvérisation formé à l'arrangement d'injection de réactif (20).

3. Système d'échappement selon les revendications 1 ou 2, **caractérisé en ce qu'**au moins un élément conducteur de chaleur (27) forme une boucle conductrice de chaleur fermé (34).

4. Système d'échappement selon la revendication 1, 2 ou 3, **caractérisé en ce qu'**une pluralité d'éléments de chauffage (40) est arrangée se succédant dans le sens du flux de gaz d'échappement.

5. Système d'échappement selon une des revendications 1-4, **caractérisé en ce que** l'arrangement de chauffage de réactif (24) comprend au moins un élément de chauffage (26) qui peut être chauffé par une excitation électrique et au moins un élément de transfert de chaleur (50, 52 ;50') essentiellement en forme de plaque qui est en communication de transfert de chaleur avec l'élément de chauffage (26).

6. Système d'échappement selon la revendication 5, **caractérisé en ce qu'**au moins un élément de transfert de chaleur en forme de plaque (50, 52 ;50') comprend une surface d'élément de transfert de chaleur (O_{W}) essentiellement parallèle à un flux de gaz d'échappement.

7. Système d'échappement selon les revendications 5 ou 6, **caractérisé en ce qu'**au moins un élément de chauffage (26) est supporté entre deux éléments de transfert de chaleur en forme de plaque (50, 52) interconnectés et de préférence au moins en partie en appui.

8. Système d'échappement selon une des revendications 5-7, **caractérisé en ce qu'**un médium de transfert de chaleur (58), de préférence une poudre de métal ou/et un matériau de graphite, est arrangé entre au moins un élément de transfert de chaleur en forme de plaque (50, 52) et un élément de chauffage (26).

9. Système d'échappement selon une des revendications 5-7, **caractérisé en ce qu'**au moins un élément de transfert de chaleur en forme de plaque (50, 52 ;50') comprend une pluralité d'ouvertures de passage de gaz d'échappement (60) ou/et d'éléments de guidage de gaz d'échappement.

10. Système d'échappement selon une des revendications 1-9, **caractérisé en ce que** l'arrangement de chauffage de réactif (24) comprend au moins un élément de chauffage en céramique (64) qui peut être chauffé par excitation électrique.

11. Système d'échappement selon la revendication 10, **caractérisé en ce qu'**au moins un élément de chauffage en céramique (64) comprend une pluralité de sections de chauffage en forme de barre (68).

12. Système d'échappement selon une des revendications 1-11, **caractérisé en ce que** l'arrangement de chauffage de réactif (24) comprend au moins un élément de chauffage (26) qui peut être chauffé par excitation électrique et un corps de réception de réactif (70) poreux entourant l'élément de chauffage (26) au moins en partie, de préférence fait d'un matériau de mousse métallique ou d'un treillis métallique.

13. Système d'échappement selon une des revendications 1-12, **caractérisé en ce qu'**un arrangement de traitement à réactif (18), de préférence un arrangement de catalyseur pour la réaction catalytique sélective ou/et un filtre à particules, est arrangé en aval de l'arrangement de mélangeur (22).
